# FASCICULE DE BREVET EUROPEEN

(11) **EP 1 427 241 B1**
(45) Date de publication et mention de la délivrance du brevet: **10.09.2008**
(21) Numéro de dépôt: 03104433.2
(22) Date de dépôt: 28.11.2003
(51) Int. Cl.: H04Q 7/38, H04B 7/26

(54) **Procédé d'optimisation de débit bidirectionnel pour téléphones mobiles fonctionnant selon un système TDMA**
Verfahren zur Optimierung des bidirektionellen Durchflusses für Mobiltelefone die gemäss eines TDMA-Systems arbeiten
Method of optimizing the bidirectionnal rate for mobile phones operating in accordance with a TDMA system

(30) Priorité: 03.12.2002 FR 0215493
(43) Date de publication de la demande: 09.06.2004
(73) Titulaire: SAGEM MOBILES, 75512 Paris (FR)
(72) Inventeur: Romao, Fernando, 78360 Montesson (FR); Vessière, Thierry, 95280 Jouy le Moutier (FR)
(74) Mandataire: Camus, Olivier Jean-Claude

(56) Documents cités:
- EP-A- 1 115 217
- US-A- 4 507 781
- US-A- 6 016 311
- US-A1- 2002 110 083
- US-B1- 6 240 076
- US-B1- 6 650 630

## Description

### DOMAINE TECHNIQUE DE L'INVENTION

La présente invention a pour objet un procédé d'optimisation de débit bidirectionnel pour téléphones mobiles fonctionnant dans un système de type TDMA (Time Division Multiple Access en anglais pour accès multiple à répartition dans le temps), par exemple selon un système GPRS (General Packet Radio Service en anglais pour service général de transmission par paquets), ou dans un système EGPRS Enhanced General Packet Radio Service en anglais), ou encore dans un système HSCSD (High Speed Circuit Switcher Data en anglais). Elle sera, à titre d'exemple, plus particulièrement décrite dans le cadre d'un système GPRS, mais sa mise en oeuvre est directement applicable aux systèmes EGPRS et HSCSD.

L'invention a pour but essentiel de rétablir un certain équilibre dans la répartition de fenêtres temporelles fractionnant les trames de communication, qui sont consacrées d'une part à l'émission de données, et d'autre part à la réception de données selon le système GPRS. Elle rencontre un intérêt particulier avec certaines applications telles qu'une application de visio-conférence avec un téléphone mobile.

Le domaine de l'invention est, d'une façon générale, celui de la téléphonie mobile. Dans ce domaine, des téléphones mobiles, ou combinés mobiles, sont de plus en plus perfectionnés, améliorant ainsi la qualité dans les télécommunications qu'ils permettent d'établir. Ils ont été adaptés à différentes normes qui se sont succédées et/ou qui coexistent, par exemple les normes GSM, DCS, UMTS... Ces différentes normes utilisent comme support différents réseaux de télécommunication.

Entre deux éléments de tels réseaux, par exemple un combiné mobile et une station de base, on emploie un cadencement des émissions et des réceptions selon un mode de trames, chaque trame pouvant en particulier être divisée en fenêtres temporelles. Dans la norme GSM (Global System for Mobile communication) en particulier, avec un accès multiple à répartition en fréquence FDMA (pour Frequency Division Multiple Access dans la littérature anglo-saxonne), des canaux de fréquence de largueur étroite, dans la pratique de 200 KHz, sont institués. Ces canaux sont contigus les uns aux autres et forment la totalité de la bande. Il existe d'autres normes, par exemple la norme UMTS, où un accès multiple à répartition par le code, CDMA en littérature anglo-saxonne, est institué. Il conduit à des canaux de largueur plus grande, en pratique de 2ⁿ fois une bande de base de 200 KHz. De plus, que la transmission se fasse ou non avec agilité en fréquence, le calage des récepteurs sur la fréquence exacte d'émission est une contrainte particulièrement sévère. La même contrainte vaut pour les systèmes à répartition par la fréquence ou à répartition par le code. Cette contrainte impose une précision de calage de fréquence des oscillateurs des récepteurs des téléphones mobiles voisine de quelques parties par million seulement.

Dans le domaine du GSM, et plus généralement de la téléphonie mobile, les signaux échangés entre une station de base et un téléphone mobile servent notamment à moduler une fréquence porteuse Fp pour transporter des données éditées par les utilisateurs. La fréquence Fp, appelée voix fréquentielle, est choisie parmi un ensemble de fréquences porteuses utilisables pour une telle liaison. Par ailleurs, des signaux de signalisation servent à indiquer au téléphone mobile quelle sera la fréquence Fp sur laquelle il aura à converser quand ce téléphone mobile sera appelé.

En outre pour une voix fréquentielle Fp, on constitue un canal en partageant le temps alloué à un utilisateur et à un ou plusieurs autres, selon un mode TDMA. On constitue ainsi des fenêtres temporelles, également appelées time slots, ou encore slots. Dans un exemple, dans le cas du GSM en particulier, la durée d'une telle fenêtre temporelle est de 577 microsecondes. Pour des fenêtres temporelles successives, différents canaux sont ainsi constitués qui permettent différentes communications, réunissant différents interlocuteurs et leur permettant de converser entre eux. Les canaux destinés essentiellement à la réception ou à l'émission de données sont appelés canaux de trafic. Ils sont supportés par des trames dites trames de communication, appelées plus simplement trames dans la suite de la description. Il existe d'autres canaux, tels que par exemple les canaux de balise.

Dans la pratique, on constitue ainsi des trames avec un certain nombre de fenêtres temporelles. Dans un exemple où il y a huit fenêtres temporelles par trame, la durée d'une trame est de 4,616 millisecondes. Le rang d'une fenêtre temporelle dans la trame est aussi une des indications qui doivent être données au téléphone mobile dans les signaux de signalisation pour lui dire comment doivent s'échanger les différentes informations entre lui et son interlocuteur.

Dans le système dit GPRS, plutôt que de n'accorder qu'une fenêtre temporelle par trame au téléphone mobile pour recevoir des données de la station de base et une unique fenêtre temporelle pour transmettre des données depuis le téléphone vers la station de base, on a initialement prévu que le mode de transmission soit déséquilibré. Par exemple au cours d'une trame, un certain nombre de fenêtres temporelles consécutives sont consacrées à la réception et un nombre plus restreint de fenêtres temporelles sont consacrées à l'émission par le téléphone mobile. Un tel mode déséquilibré est justifié notamment pour une consultation de type Internet dans laquelle les questions sont courtes, mais dans laquelle les réponses provenant du réseau Internet sont longues (transmission d'images en particulier). Certains téléphones mobiles peuvent notamment utiliser l'architecture d'un réseau GSM pour émettre des données sous forme de paquets de données tels que définis par le système GPRS. Ainsi, plus qu'un service supplémentaire, le système GPRS représente une évolution majeure dans la mise en oeuvre de la norme GSM. Par l'utilisation de la commutation par paquets et l'augmentation des débits, ce système ouvre la porte aux applications mobiles multimédia.

Un téléphone mobile souhaitant émettre des données via un réseau prévu pour la mise en oeuvre de transmission de données selon le système GPRS est réglé, en usine, selon une configuration parmi plusieurs en fonction principalement d'une qualité de service à laquelle il est destiné. En effet, chaque configuration est définie pour déterminer le débit maximum que le téléphone mobile pourra supporter en émission, ou voie montante, et le débit maximum que le téléphone mobile pourra supporter en réception, on voie descendante. Dans le cadre du système GPRS utilisant des réseaux de type GSM, le débit dépend du nombre de fenêtres temporelles réservées dans une trame.

Les instances de normalisation ont défini, toujours pour le système GPRS, un ensemble de classes correspondant chacune à une configuration. On parle alors, par exemple, d'un téléphone de classe 8 afin de désigner un téléphone pour lequel, dans chaque trame, quatre fenêtres temporelles maximum seront attribuées à la voie descendante et une fenêtre temporelle maximum pour la voie montante. Un autre exemple, qui servira d'illustration principale pour la description de la mise en oeuvre de l'invention, est la classe 10, dans laquelle le nombre total de fenêtres temporelles réservées pour l'émission et pour la réception est égal à 5, quatre voies au maximum étant réservées pour la réception, et deux voies au maximum étant réservées pour l'émission. Au total, 29 classes de terminaux GPRS ont été à ce jour définies. La liste de classes est répertoriée notamment dans la norme GSM 05.02, annexe B.

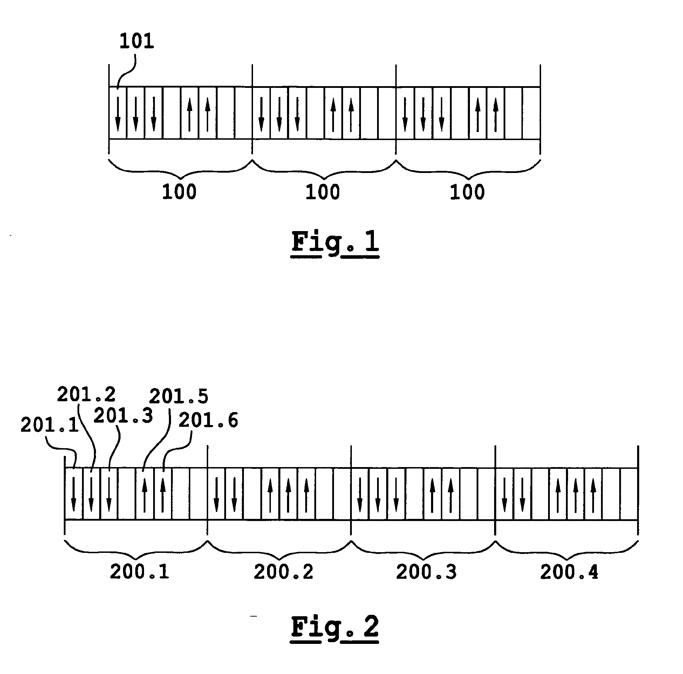

La figure 1 donne un exemple de l'organisation de trames 100 de communication qui sont échangées entre un téléphone mobile et une station de base selon la classe 10 du système GPRS. Sur cette figure, chaque trame est fractionnée, à titre d'exemple, en huit fenêtres temporelles 101. Les trois premières fenêtres temporelles de chaque trame sont consacrées à la réception de données, symbolisée par une flèche descendante. Une fenêtre temporelle est ensuite inoccupée : le téléphone mobile dispose ainsi d'au moins la durée de cette fenêtre temporelle pour passer d'une fréquence à une autre, en l'occurrence pour passer d'une fréquence de réception à une fréquence d'émission. Les deux fenêtres temporelles suivantes sont consacrées à des phases d'émission, symbolisées par des flèches montantes. Cette organisation est ainsi répétée dans l'ensemble des trames du canal de trafic.

Par soucis de simplification, on ne s'intéresse pas, dans l'exposé de l'invention, aux fenêtres temporelles réservées aux phases de mesure prévues dans la norme. Il n'est pas tenu compte non plus de la gestion d'un phénomène de décalage temporel, ou "timing advance" : dans la pratique, le cadencement des trames d'émission n'est pas en phase avec le cadencement des trames de réception. En effet, ces cadencements sont en phase à l'endroit de la station de base, alors qu'à l'endroit des téléphones mobiles, ils supportent un décalage, précisément le "timing advance", qui est égal au double du temps de propagation aller/retour entre le téléphone mobile et la station de base.

Cependant, un certain nombre de limitations et de problèmes sont intimement liés à l'organisation du système GPRS en classes telles qu'elles sont actuellement définies. La structure des trames, imposées par les différentes classes, limite également l'intérêt du système GPRS dans certains modes d'utilisation du téléphone mobile.

En effet, le système GPRS a initialement été développé pour répondre à un besoin particulier afférent à une nouvelle fonctionnalité des téléphones mobiles : celle de consulter de façon interactive des serveurs informatiques. Cette consultation interactive nécessite en effet un débit plus important sur la voie descendante que sur la voie montante. Afin de gérer un débit plus important sur la voie descendante, GPRS spécifie sur la voie descendante des contraintes plus importantes que sur la voie montante. Par exemple, un combiné mobile GPRS de classe 10, qui peut gérer trois intervalles de temps en réception et un intervalle de temps en émission, a un débit pouvant atteindre 3x21,4=64,2 kbit/s (kilo-bits par seconde), 21,4 kbits/s correspondant au débit maximal disponible avec une unique fenêtre temporelle disponible par trame en réception.

S'il répond parfaitement à ses objectifs initiaux, le système GPRS n'est cependant pas adapté à certains cas de figure : par exemple, dans le cas de l'utilisation du téléphone mobile pour communiquer par visio-conférence, s'il est intéressant d'avoir recours au système GPRS pour le débit qu'il autorise, il n'y a en revanche aucune raison de privilégier la voie descendante par rapport à la voie montante en terme de débit : en effet, ceci reviendrait à favoriser la réception sur l'émission, ce qui n'a aucun sens dans le cas où l'interlocuteur dispose d'un téléphone mobile équipé d'un système similaire à celui de l'utilisateur : l'utilisateur aurait alors un débit en réception supérieur au débit en émission de son interlocuteur, ce qui n'a aucun intérêt.

Par ailleurs, dans le système GPRS tel qu'il est initialement prévu, un téléphone mobile doit être calé sur une classe de fonctionnement particulière du système GPRS et il ne peut pas changer de classe pour se conformer à une autre classe dont la répartition des ressources, au sein d'une trame, en terme de fenêtres temporelles disponibles en émission et en réception serait plus adaptée à son utilisation à un instant donné. Cet inconvénient est accentué par le fait qu'aucune classe ne prévoit d'attribuer un nombre variable de fenêtres temporelles en émission et un nombre variable de fenêtres temporelles en réception.

### ETAT DE LA TECHNIQUE

Afin d'apporter des réponses à ces problèmes, plusieurs solutions ont été proposées. On connaît notamment, dans l'état de la technique, le document US 6 016 311 qui divulgue un procédé et un appareil permettant d'allouer dynamiquement des slots en réception et en émission pour une communication. Dans ce document, on détermine les besoins en émission et en réception d'une communication donnée, et on réserve en conséquence un nombre de slots pour l'émission et pour la réception. Le nombre de slots affectés à l'émission et à la réception peut varier d'une trame à l'autre mais avec un nombre total de slots constant. On connaît aussi la demande de brevet EP 0926845, qui décrit un procédé d'allocation dynamique de bande passante dans un système TDMA en affectant dynamiquement un nombre variable de slots. On connaît également la demande de brevet internationale WO 00/74407, qui décrit un procédé et un dispositif pour un système GPRS où le débit avec une station mobile peut être négocié à une valeur multiple du débit nominal. Pour ce faire, un nombre approprié de slots est alloué.

Cependant, avec de tels systèmes, on ne prévoit pas d'obtenir des débits plus précis que ceux initialement prévus par le système GPRS initial. En effet, on propose dans l'état de la technique des modifications dans les attributions des slots qui permettent d'obtenir uniquement des débits qui sont des multiples entiers des débits initialement prévus, mais les modifications proposées ne permettent jamais d'obtenir des débits intermédiaires, c'est à dire des débits dont les valeurs sont comprises entre deux multiples entiers des valeurs initialement prévues pour ces débits dans le système GPRS.

On connaît, dans l'état de la technique, le document US 2002/0110083 qui divulgue un procédé dans lequel on alloue un certain nombre de slots par trame de longueur fixe à un équipement mobile communicant avec une station de base. Afin de réaliser des débits fractionnaires, le nombre de slots alloués par trame correspond à un multiple entier d'un débit nominal et la portion fractionnaire du débit est additionnée à chaque trame, le résultat étant transmis à travers un slot supplémentaire alloué périodiquement.

Le document US 4 507 781 divulgue aussi un procédé de réalisation de débits fractionnaires dans un système de communication TDMA dans lequel le nombre de slots affectés à une communication varie d'une trame à l'autre dans un groupe répétitif de trames.

### DESCRIPTION GENERALE DE L'INVENTION

L'objet de la présente invention permet de répondre à cette carence de l'état de la technique. En effet, la présente invention prévoit un procédé dans lequel, lorsqu'un combiné mobile communique selon un système GPRS, il est possible d'intervenir sur le débit instantané des échanges d'informations entre la station de base et le téléphone mobile pour obtenir un débit dit multislot fractionnaire, c'est à dire dont la valeur est un multiple non entier d'une valeur de débit initialement prévue dans le système GPRS .

A cet effet, le procédé selon l'invention prévoit de mettre en oeuvre un procédé dans lequel la répartition des attributions des fenêtres temporelles pour l'émission ou pour la réception est modifiable, la modification consistant à faire varier périodiquement la répartition de ces attributions. Dans le procédé selon l'invention, le nombre de fenêtres temporelles dédiées à la réception est, pour des trames consécutives, variable, ainsi que le nombre de fenêtres temporelles dédiées à l'émission.

La répartition et le caractère variable de certaines fenêtres temporelles est préalablement prévu : la structure des trames est dores et déjà prévue dans le protocole, ce qui revient plus ou moins à créer une classe supplémentaire où la structure des trames, en terme de position des fenêtres temporelles d'émission et de réception, diffère d'une trame à l'autre.

Dans un mode particulier de mise en oeuvre effectué en terme correctif, on procède à une attribution directe, par le réseau de télécommunication, des intervalles de temps à l'émission ou à la réception. Pour ce faire, on commande une fonction du téléphone mobile qui permet de changer la configuration du téléphone mobile lorsque les débits requis pour la communication ne sont pas, ou ne sont plus, satisfaits par la structure des trames de communication alors utilisée. Le changement commandé vise alors à rétablir une correspondance entre le débit requis et une structure de trames avec une répartition optimale des slots d'émission et de réception dans différentes trames consécutives. Plus particulièrement, le procédé selon l'invention propose de faire varier d'une trame à l'autre le nombre de slots en émission et en réception pour obtenir des débits plus appropriés, par exemple plus équilibrés entre l'émission et la réception.

L'organisation des trames de communication dans le procédé selon l'invention est de préférence périodique, de telle sorte que des trames servant de support au canal de trafic et espacées d'un nombre de trames déterminé et constant ont la même structure, c'est à dire le même nombre de fenêtres temporelles dédiées à la réception et le même nombre de fenêtres temporelles dédiées à l'émission, avec de préférence le même emplacement dans la trame. Dans cette périodicité, on ne tient pas compte des trames particulières du canal de trafic, telles que les trames dite SACCH au cours desquelles le mobile rapatrie à la station de base des mesures effectuées sur les stations de base voisines, ou telles que les trames dites "idle" (oisif) au cours desquelles le téléphone mobile mesure l'activité des stations de base voisines.

L'invention concerne donc un procédé d'optimisation de débit bidirectionnel pour un téléphone mobile fonctionnant selon un système TDMA, le téléphone mobile communiquant sur un réseau de télécommunication de type GSM en échangeant des informations avec une station de base, les informations étant échangées sous forme de trames de communication structurées en plusieurs fenêtres temporelles, selon la revendication 1.

Par variation périodique, on désigne le fait que la répartition des slots pour l'émission et pour la réception est répétée après un certain nombre de trames. Le nombre de fenêtres temporelles affectées à l'émission ou le nombre de fenêtres temporelles affectées à la réception peut ainsi être, en moyenne dans le temps, fractionnaire.

Dans un mode de mise en oeuvre, le nombre de fenêtres temporelles affectées à l'émission est en moyenne dans le temps égal au nombre de fenêtres temporelles affectées à la réception. Dans un mode de mise en oeuvre particulier, le nombre de fenêtres temporelles affectées pour l'émission et le nombre de fenêtres temporelles affectées pour la réception varient systématiquement d'une trame à la trame suivante.

Selon différentes mises en oeuvre, pour chaque trame, le nombre total de fenêtres temporelles affectées à l'émission et à la réception est constant par trame de communication, et/ou impair pour chaque trame de communication. Dans certains exemples, la différence entre le nombre de fenêtres temporelles affectées pour l'émission et le nombre de fenêtres temporelles affectées pour la réception est, en valeur absolue, inférieur ou égal à un.

Dans un mode de mise en oeuvre, l'affectation des fenêtres temporelles à l'émission et à la réception dépend, à chaque instant, d'un mode de fonctionnement du téléphone mobile à cet instant.

Dans un mode particulier de mise en oeuvre, effectué en terme correctif d'un mode précédent, l'affectation des fenêtres temporelles à l'émission et à la réception est directement gérée par le réseau de télécommunication. Dans ce cas, le réseau de télécommunication peut commander une fonction du téléphone mobile permettant des débits en émission et/ou en réception différents de ceux correspondant au fonctionnement en cours du téléphone mobile. Dans un exemple de mise en oeuvre qui ne fait pas partie de l'invention, la fonction particulière peut notamment modifier la répartition des fenêtres temporelles affectées à l'émission et à la réception d'une trame de communication à l'autre.

Dans tous les modes de mise en oeuvre, les données émises par le téléphone mobile peuvent être préalablement mémorisées dans une mémoire tampon, pour être par exemple émises lorsque le nombre de fenêtres temporelles affectées à l'émission dans une trame de communication est supérieur à un nombre prédéterminé de fenêtres temporelles réservées à l'émission.

La présente invention a également pour objet tout téléphone mobile susceptible de mettre en oeuvre le procédé qui vient d'être évoqué Elle couvre également l'utilisation de ce procédé, ou du téléphone mobile mettant en oeuvre ledit procédé, dans un système de type TDMA, par exemple un système GPRS, EGPRS ou HSCSD.

L'invention et ses différentes applications seront mieux comprises à la lecture de la description qui suit et à l'examen des figures qui l'accompagnent. Celles-ci ne sont présentées qu'à titre indicatif et nullement limitatif de l'invention.

### BREVE DESCRIPTION DES DESSINS

Les figures montrent :
- à la figure 1, déjà décrite, la structure des trames de communication, dans l'état de la technique, pour une classe particulière du système GPRS ;
- à la figure 2, un exemple de structure des trames de communication telles qu'elles peuvent être organisées dans le procédé selon l'invention.

### EXPOSE D'UN MODE DETAILLE DE REALISATION DE L'INVENTION

Sur la figure 2, on a représenté un ensemble de trames de communication consécutives 200-x, x représentant le numéro de la trame représentée. Les différentes trames de communication sont fractionnées en fenêtres temporelles 201-y, y représentant la position de la fenêtre temporelle au sein de la trame. Dans cet exemple, une trame comportant huit slots, y peut prendre comme valeur tout nombre entier compris entre 1 et 8.

Dans l'exemple illustré, on a choisi de prendre des structures de trames proches de celles présentées à la figure 1 ; la trame 200-1 pourrait d'ailleurs correspondre à une trame de communication d'un téléphone mobile respectant la classe 12 du système GPRS précédemment illustrée. Elle comporte en effet trois fenêtres temporelles consécutives, 201-1 à 201-3 attribuées à la réception, et deux fenêtres temporelles 201-5 et 201-6 attribuées à l'émission. Par contre, la trame suivante, 200-2 comporte uniquement deux fenêtres temporelles consécutives, par exemple 201-1 et 201-2, attribuées à la réception, et trois fenêtres temporelles, 201-4 à 201-6 attribuées à l'émission. Dans cet exemple, la périodicité de la structure des trames est de deux trames, l'ensemble des trames 200-x où x est impair ayant la même structure que la trame 200-1, et l'ensemble des trames 200-x où x est pair ayant la même structure que la trame 200-2.

Une telle succession de trames de communication peut notamment permettre d'équilibrer un débit entre l'émission et la réception. Dans certains cas, comme celui illustré à la figure 2, on aboutit à un système GPRS qu'on peut qualifier de multislot fractionnaire : le débit en réception et/ou en émission, en prenant comme unité de référence la durée d'une fenêtre temporelle est fractionnaire. A la figure 2, le débit, en émission//réception, devient 2,5//2,5.

Plus généralement, si 2n+1 intervalles de temps sont disponibles, par trame de communication, pour être affectés à l'émission ou à la réception, on peut, conformément à l'exemple illustré, c'est à dire avec une variation de 1 slot en émission et en réception entre deux trames consécutives, avec une différence, pour chaque trame, entre le nombre de slots affectés à l'émission et le nombre de slots affectés à la réception, égale à 1, et avec une périodicité de deux trames, obtenir des débits en émission//réception du type (2n+1)/2 // (2n+1)/2. Encore plus généralement, en jouant sur une des conditions qui vient d'être précisée, on peut obtenir des débits en émission//réception du type (2n+1)p/q // (2n+1)p/q, la fraction p/q dépendant des débits relatifs en émission et réception du téléphone mobile.

Selon l'invention, l'alternance de trames, quelle que soit sa périodicité, a été préalablement définie dans le protocole de communication du système GPRS. La programmation temporelle des trames, avec leur structure, a été préalablement définie et est mise en oeuvre de façon automatique et dépend de l'utilisation du téléphone mobile qui en est faite. Par exemple, le réseau est capable de détecter une utilisation du téléphone mobile comme support de visio-conférence, et met alors en application la répartition des fenêtres temporelles préalablement prévue. De préférence, dans ce cas, on aura une structure et une succession des trames permettant d'obtenir un débit optimal et équilibré entre l'émission et la réception.

Dans un mode particulier de mise en oeuvre, effectué en terme correctif, on prévoit une gestion directe de l'attribution des fenêtres temporelles par le réseau ; celui-ci envoie des messages dits de haut niveau (désignés comme niveau L2 ou L3 dans les spécifications de GPRS) pour commander une fonction particulière du téléphone mobile. Dans un exemple de mise en oeuvre qui ne fait pas partie de l'invention, cette fonction particulière a la capacité de changer le téléphone mobile de configuration en imposant une nouvelle structure à chaque trame. Ainsi, lorsque les débits respectifs nécessaires en émission ou en réception ne correspondent pas aux durées respectives de l'attribution en cours, c'est à dire au nombre de slots disponibles par trames, en émission ou en réception, le changement commandé vise à rétablir cette correspondance.

L'alternance de trames préalablement définie peut être mise en oeuvre en fonction de l'application utilisée à un moment donné, conformément au protocole, et le mode particulier de mise en oeuvre peut être appliqué en permanence, en terme correctif du premier moyen, quelle que soit l'application en cours.

Dans tous les cas, on prévoit au sein du téléphone mobile un module de mémoire particulier, de type mémoire tampon, ou buffer, pour mémoriser des données en émission qui n'ont pas pu être transmises avec une trame, mais qui, du fait de la variation du nombre de fenêtres temporelles attribuées à l'émission dans le procédé selon l'invention, pourront être transmis avec une trame suivante, de préférence la trame directement suivante. A cet effet, on définit, pour chaque configuration mise en oeuvre dans le procédé selon l'invention, une valeur de référence qui est un nombre minimal de slots affectés par trame à l'émission. Dès qu'on dispose d'une trame avec un nombre de slots en émission supérieur à la valeur de référence, des données mémorisées dans le buffer sont transmises.

Le procédé selon l'invention a été décrit dans le cadre du système GPRS. Il peut cependant également être utilisé avec le système HSCSD (pour High Speed Circuit Switching Data), qui est une adaptation du GSM pour effectuer des communications en mode circuit.

## Revendications

1. Procédé d'optimisation de débit bidirectionnel
- pour un téléphone mobile fonctionnant selon un système TDMA,
- le téléphone mobile communiquant sur un réseau de télécommunication de type GSM en échangeant des informations avec une station de base,
- les informations étant échangées sous forme de trames de communication (200-x) structurées en plusieurs fenêtres temporelles (201-y),
**caractérisé en ce que**
- des trames consécutives sont groupées en groupes de trames,
- les trames d'un groupe étant espacées des trames homologues d'un groupe consécutif par un nombre de trames déterminé constant, les groupes de trames possédant ainsi un même nombre de trames,
- dans un groupe de trames, le nombre des fenêtres temporelles (201-y) pour l'émission et pour la réception varie d'une trame à l'autre,
- une répartition de ces fenêtres temporelles, en émission et en réception, dans un groupe de trames est répétée dans un groupe suivant,
- le nombre total de fenêtres temporelles (201-y) affectées par trame de communication (200-x) ensemble, à l'émission et à la réception, est constant d'une trame à l'autre,
- la répartition des fenêtres temporelles dans les trames d'un groupe, est préalablement définie et est mise en oeuvre automatiquement en fonction de l'application utilisée à un moment donné par le téléphone mobile,
- la mise en oeuvre d'une répartition préalablement définie est effectuée par le réseau suite à une détection de l'application utilisée par le téléphone mobile.

2. Procédé selon la revendication précédente **caractérisé en ce que** le nombre de fenêtres temporelles (201-y) affectées à l'émission est en moyenne dans le temps égal au nombre de fenêtres temporelles (201-y) affectées à la réception.

3. Procédé selon l'une des revendications précédentes **caractérisé en ce que** le nombre de fenêtres temporelles (201-y) affectées à l'émission ou le nombre de fenêtres temporelles (201-y) affectées à la réception est, en moyenne dans le temps, fractionnaire.

4. Procédé selon l'une des revendications précédentes **caractérisé en ce que** le nombre total, pour chaque trame de communication (200-x), de fenêtres temporelles (201-y) affectées à l'émission et à la réception est impair.

5. Procédé selon l'une des revendications précédentes **caractérisé en ce que** la différence entre le nombre de fenêtres temporelles (201-y) affectées à l'émission et le nombre de fenêtres temporelles (201-y) affectées à la réception est, en valeur absolue, inférieur ou égal à 1.

6. Procédé selon l'une des revendications précédentes **caractérisé en ce que** l'affectation des fenêtres temporelles (201-y) à l'émission et à la réception dépend, à chaque instant, d'un mode de fonctionnement du téléphone mobile à cet instant.

7. Procédé selon l'une des revendications 1 à 6 **caractérisé en ce que** l'affectation des fenêtres temporelles (201-y) à l'émission et à la réception est directement gérée par le réseau de télécommunication.

8. Procédé selon la revendication précédente **caractérisé en ce que** le réseau de télécommunication commande en terme correctif une fonction particulière du téléphone mobile permettant des débits en émission et/ou en réception différents de ceux correspondant au fonctionnement en cours du téléphone mobile.

9. Procédé selon l'une des revendications précédentes **caractérisé en ce que** les données émises par le téléphone mobile sont mémorisées au préalable dans une mémoire tampon.

10. Téléphone mobile **caractérisé en ce qu'**il comprend des moyens pour mettre en oeuvre le procédé selon l'une quelconque des revendications précédentes.

11. Utilisation du procédé ou du téléphone mobile selon l'une quelconque des revendications 1 à 10 précédentes dans un système de type TDMA, **caractérisé en ce que** ledit système est un système GPRS, EGPRS ou HSCSD.

## Claims

1. Method for optimising the bi-directional rate
- for a mobile telephone operating according to a TDMA system,
- the mobile telephone communicating on a telecommunications network of the GSM type by exchanging data with a base station,
- the data being exchanged in the form of communication networks (200-x) structured into several temporal windows (201-y),
**characterised in that**
- the consecutive networks are grouped into groups of networks,
- the networks of a single group being spaced out from the homologous networks of a consecutive group by a determined constant number of networks, the network groups thus having a same number of networks,
- in a group of networks, the number of temporal windows (201-y) for emission and for reception vary from one network to another,
- a distribution of these temporal windows, in emission mode and in reception mode, within a group of networks is repeated within a following group,
- the total combined number of temporal windows (201-y) affected per communication network (201-x), for emission and for reception, is constant from one network to another,
- the distribution of the temporal windows within the networks of a group, is defined in advance and is automatically implemented according to the application used by the mobile telephone at a given time,
- the implementation of a pre-defined distribution is carried out by the network after detection of the application used by the mobile telephone.

2. A method according to the previous claim, **characterised in that** the number of temporal windows (201-y) affected to the emission mode is on average within the time equal to the number of temporal windows (201-y) affected to the reception mode.

3. A method according to one of the previous claims, **characterised in that** the number of temporal windows (201-y) affected to the emission mode or the number of temporal windows (201-y) affected to the reception mode is, on average within the time, fractional.

4. A method according to one of the previous claims, **characterised in that** the total number, for each communication network (200-x), of temporal windows (201-y) affected to the emission mode and to the reception mode is uneven.

5. A method according to one of the previous claims, **characterised in that** the difference between the number of temporal windows (201-y) affected to the emission mode and the number of temporal windows (201-y) affected to the reception mode is, in absolute value, lower than or equal to 1.

6. A method according to one of the previous claims, **characterised in that** the affectation of the temporal windows (201-y) to the emission mode and to the reception mode depends, at each instant, on an operating mode of the mobile telephone at such time.

7. A method according to one of the claims 1 to 6, **characterised in that** the affectation of the temporal windows (201-y) to the emission mode and to the reception mode is directly managed by the telecommunications network.

8. A method according to the previous claim, **characterised in that** the telecommunication network commands, in corrective terms, a particular function of the mobile telephone, enabling different emission and/or reception rates than those corresponding to the on-going operation of the mobile telephone.

9. A method according to one of the previous claims, **characterised in that** the data emitted by the mobile telephone is first memorised in a buffer memory.

10. A mobile telephone, **characterised in that** it comprises means for implementing the method according to any one of the previous claims.

11. Use of a method or of a mobile telephone according to any one of the previous claims 1 to 10 within a system of type TDMA, **characterised in that** the said system is a GPRS, EGPRS or HSCSID system.

## Patentansprüche

1. Verfahren zur Optimierung der bidirektionalen Datenübertragung
- für ein Mobiltelefon, das mit einem TDMA-System arbeitet,
- wobei das Mobiltelefon in einem Telekommunikationsnetz nach dem GSM Standard kommuniziert und Informationen mit einer Basisstation austauscht,
- wobei die Informationen in Form von Kommunikationsblöcken (200-x) ausgetauscht werden, die in mehrere Zeitfenster (201-y) eingeteilt sind,
**dadurch gekennzeichnet, dass**
- die aufeinanderfolgenden Übertragungsblöcke in Blockgruppen eingeteilt sind,
- die Blöcke einer Gruppe von den entsprechenden Blöcken einer nachfolgenden Gruppe durch eine konstant festgelegte Anzahl an Blöcken getrennt wird, wobei die Blockgruppen somit dieselbe Anzahl an Blöcken besitzen,
- in einer Blockgruppe die Anzahl der Zeitfenster (201-y) für die Sendung und den Empfang von einem Block zum anderen unterschiedlich ist,
- eine Verteilung dieser Zeitfenster, beim Senden und Empfangen, in einer Blockgruppe in einer folgenden Gruppe wiederholt wird,
- die Gesamtzahl der Zeitfenster (201-y), die je Kommunikationsblock (200-x) gemeinsam dem Senden und Empfangen zugeordnet sind, von einem Block zum anderen konstant ist,
- die Verteilung der Zeitfenster in den Blöcken einer Gruppe vorab festgelegt ist, und automatisch je nachdem, welche Anwendung zu einem gegebenen Zeitpunkt vom Mobiltelefon verwendet wird, umgesetzt wird,
- die Umsetzung einer vorab festgelegten Verteilung nach Erfassung der vom Mobiltelefon verwendeten Anwendung durch das Netzwerk erfolgt.

2. Verfahren nach dem vorherigen Anspruch, **dadurch gekennzeichnet, dass** die Anzahl der Zeitfenster (201-y), die der Sendung zugeordnet werden, im Durchschnitt in der Zeit gleich ist, wie die Anzahl der Zeitfenster (201-y), die dem Empfang zugeordnet werden.

3. Verfahren nach einem der vorherigen Ansprüche, **dadurch gekennzeichnet, dass** die Anzahl der Zeitfenster (201-y), die der Sendung oder die Anzahl der Zeitfenster (201-y), die dem Empfang zugeordnet werden, im Durchschnitt in der Zeit eine Bruchzahl ist.

4. Verfahren nach einem der vorherigen Ansprüche, **dadurch gekennzeichnet, dass** für jeden Kommunikationsblock (200-x) die Gesamtzahl an Zeitfenstern (201-y), die der Sendung und dem Empfang zugeordnet sind, eine ungerade Zahl ist.

5. Verfahren nach einem der vorherigen Ansprüche, **dadurch gekennzeichnet, dass** die Differenz zwischen der Anzahl der Zeitfenster (201-y), die der Sendung zugeordnet werden, und der Anzahl der Zeitfenster (201-y), die dem Empfang zugeordnet werden, in absoluten Werten kleiner oder gleich 1 ist.

6. Verfahren nach einem der vorherigen Ansprüche, **dadurch gekennzeichnet, dass** die Zuordnung der Zeitfenster (201-y) zur Sendung und zum Empfang zu jedem Zeitpunkt von einem Betriebsmodus abhängt, in dem sich das Mobiltelefon zu diesem Zeitpunkt befindet.

7. Verfahren nach einem der Ansprüche 1 bis 6, **dadurch gekennzeichnet, dass** die Zuordnung der Zeitfenster (201-y) zur Sendung und zum Empfang direkt vom Telekommunikationsnetz abgewickelt wird.

8. Verfahren nach dem vorherigen Anspruch, **dadurch gekennzeichnet, dass** das Telekommunikationsnetz in korrigierender Weise eine Sonderfunktion des Mobiltelefons steuert, mit der Datenmengen für die Sendung und/ oder den Empfang erzielt werden, die unterschiedlich zu jenen sind, die dem laufenden Betrieb des Mobiltelefons entsprechen.

9. Verfahren nach einem der vorherigen Ansprüche, **dadurch gekennzeichnet, dass** die vom Mobiltelefon gesendeten Daten vorab in einem Pufferspeicher abgelegt werden.

10. Mobiltelefon, **dadurch gekennzeichnet, dass** es Mittel zur Umsetzung des Verfahrens nach irgendeinem der vorherigen Ansprüche enthält.

11. Verwendung des Verfahrens oder des Mobiltelefons nach irgendeinem der vorherigen Ansprüche 1 bis 10 in einem TDMA-System, **dadurch gekennzeichnet, dass** das besagte System ein GPRS, EGPRS oder HSCSD System ist.
